**Europäisches Patentamt**

**European Patent Office**

**Office européen des brevets**

(19)

(11) Numéro de publication: **0 133 060**
**B1**

# (12) FASCICULE DE BREVET EUROPÉEN

(45) Date de publication du fascicule du brevet:
**13.08.86**

(51) Int. Cl.⁴: **H 02 G 9/10**

(21) Numéro de dépôt: **84400167.7**

(22) Date de dépôt: **25.01.84**

(54) **Regard de sécurité à siphon anti-gaz.**

(43) Date de publication de la demande:
**13.02.85 Bulletin 85/7**

(45) Mention de la délivrance du brevet:
**13.08.86 Bulletin 86/33**

(84) Etats contractants désignés:
**AT BE CH DE FR GB IT LI LU NL SE**

(56) Documents cité:
**FR-A-688 282**

(73) Titulaire: **EQUIPEMENT INDUSTRIEL NORMAND,**
**F-14540 Grentheville près Caen (FR)**

(72) Inventeur: **Coquerel, Claude, F-14540 Grentheville,**
**près Caen (FR)**

(74) Mandataire: **Madeuf, René Louis, Cabinet Madeuf**
**3, Avenue Bugeaud, F-75116 Paris (FR)**

## Description

Dans les stations-service de distribution de carburant pour les véhicules automobiles, dans les installations solvants plus ou moins volatils, dans les usines de fabrication de ces solvants, dans les dépôts de chargement de camions-citernes, dans les postes de ravitaillement divers, dans les raffineries, on est amené à manipuler des quantités considérables de produits inflammables de 1ère et de 2ème catégorie.

Or, ces installations comportent nécessairement des stockages, que ce soit d'hydrocarbures liquides (carburants, solvants et produits analogues) ou des hydrocarbures liquéfiés (G.P.L/C), dans lesquels, pour le transport d'un point à un autre de ces produits dangereux et pour leur comptage, on a été amené à utiliser des ensembles comportant des pompes et des appareils de mesurage qui sont alimentés électriquement soit sous très basse tension, soit sous tension normale par des câbles à partir d'un ou des tableaux qui sont placés dans au moins un local technique pouvant être un bâtiment spécial dans l'usine, un kiosque ou une boutique pour les stations-service ouvertes au public.

Ces installations sont particulièrement compliquées lorsqu'il s'agit de postes de distribution exploités en libre-service car, alors, il existe tout un réseau de transmission par câbles reliant chacun des appareils de distribution à la console centrale située dans la boutique ou le kiosque.

Comme cela est bien connu, chaque distributeur nécessite l'arrivée de tubes pour le produit à livrer, des câbles d'alimentation électrique et des câbles de transmission d'informations données par chaque ensemble de pompage et de mesurage.

Afin de créer des ensembles de bonne présentation, tous ces câbles cheminent souterrainement dans des galeries, des gaines techniques ou des fourreaux et buses de dimensions adaptées selon le nombre de câbles et leurs sections respectives.

Il existe bien, de place en place, des regards de dérivation et des regards de tirage pour les câbles afin de permettre les changements de direction des réseaux ou le contrôle des câbles lorsque l'on en utilise de grandes longueurs entre les postes de distribution et les postes locaux centraux.

La presque totalité de ces installations, qu'elles soient privées ou qu'elles soient publiques, font communiquer par le réseau souterrain chaque appareil de pompage et de mesurage comprenant au moins un moteur électrique et l'armoire générale dans le local technique où se trouve en permanence le préposé à l'exploitation d'au moins une console centrale en cas de libre-service, mais dans ce local exitent également pour le confort du personnel des appareils de chauffage électrique résistant aux gaz et un convecteur ou climatiseur protégés.

Cependant, malgré toutes les protections prises, il peut arriver que des fuites ou des suintements se produisent le long des tuyauteries ou sur les garnitures de la partie hydraulique à l'intérieur du poste de distribution contenant l'ensemble de pompage et de mesurage.

Les produits manipulés étant extrêmement volatils, les gaz s'accumulent très rapidement dans les regards, dans les galeries ou gaines techniques, dans les fourreaux ou buses et ainsi ces produits gazeux arrivent jusqu'au local central de contrôle.

On se trouve donc en présence très rapidement d'un mélange explosif extrêmement dangereux non seulement par sa toxicité mais surtout par le risque de déflagration en cas de flamme nue, d'un contact électrique faisant étincelle, d'un point chaud quelconque et même d'une charge électrique statique quelconque pouvant se produire au ras du sol.

Le résultat est, évidemment, obligatoirement, une explosion des gaz détonants avec parfois des accidents sur les personnes.

La présente invention a pour objet de remédier à ces inconvénients en créant un regard de sécurité formant siphon anti-gaz pour éviter l'accumulation de mélanges explosifs dangereux.

Conformément à l'invention, le regard de sécurité à siphon anti-gaz pour installations dangereuses enterrée dans le sol et reliée par des pas à des galeries, des gaines ou conduits divers conduisant d'une part, à des postes de distributions contenant de nombreusse groupes moto-pompes-mesureurs et, d'autre part, à au moins un central ressemblant les informations, est caractérisé en ce qu'il comprend une cuve de grandeur et de forme diverses fermée par un couvercle muni, en son centre, d'une cloison verticale dont l'extrémité inférieure est située à une certaine hauteur du fond de la cuve; cette dernière étant remplie d'un liquide neutre dont le niveau dépasse notoirement l'extrémité de la cloison centrale sous laquelle passent les câbles électriques de liaison entre les ensembles de distributeurs-mesureurs et le poste central de façon à ce que cette cloison verticale délimite deux compartiments amont et aval complètement séparés par le liquide neutre puis les dispositifs complémentaires de sécurité étant placés dans chacun des compartiments pour, d'un côté, détecter les mélanges détonants et de l'autre côté contrôler le niveau du liquide neutre.

Suivant une mode de réalisation préféré de l'invention, la partie supérieure de la cuve comporte un pourtour évasé destiné à supporter la périphérie du couvercle afin d'étanchéifier la cuve.

Une forme de réalisation de l'objet de l'invention est représentée, à titre d'exemple non limitatif, au dessin annexé.

La fig. 1 est une coupe-élévation montrant un regard de sécurité formant siphon anti-gaz.

La fig. 2 est une coupe transversale du regard de sécurité formant siphon anti-gaz suivant la ligne II-II de la fig. 1.

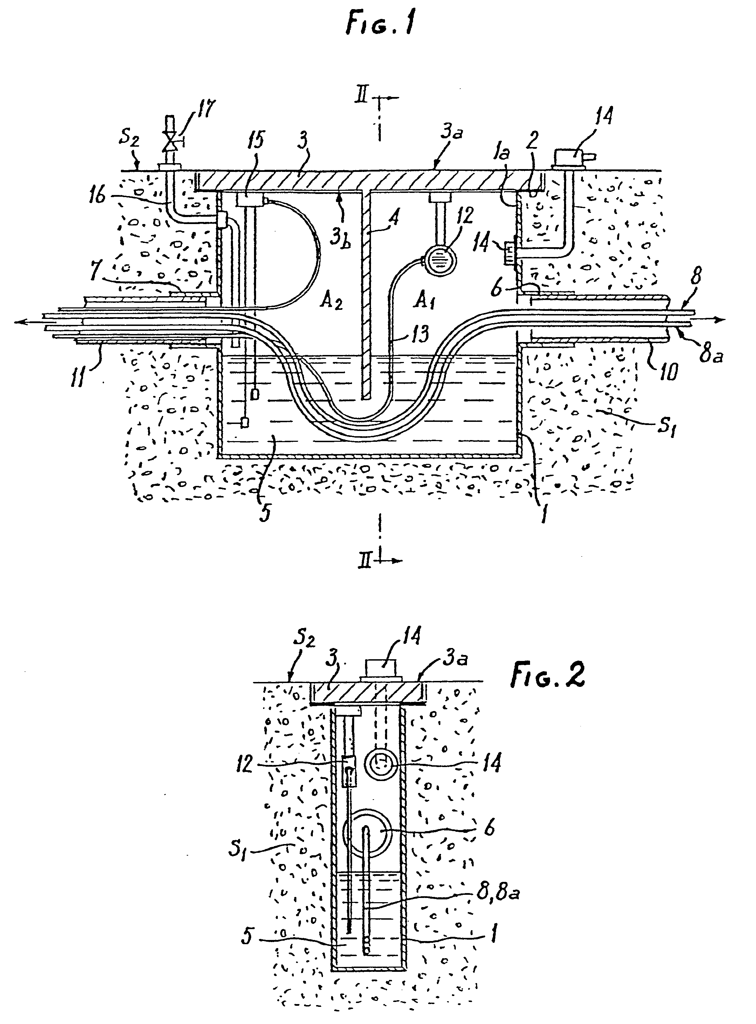

A la fig. 1, on a représenté une cuve, de forme pàrallélépipédique rectangle 1, noyée dans un sol S1 de façon que sa partie supérieure 1a qui comporte un pourtour 2 élargi vienne affleurer la surface S2 du sol S1.

Le pourtour 2 est destiné à recevoir un couvercle 3 de forme épousant exactement le pourtour 2 et dont la face supérieure 3a est exactement dans le prolongement du sol S2.

La partie inférieure 3b du couvercle 3 porte une cloison verticale 4 divisant la cuve 1 en deux compartiments, l'un amont A1, et l'autre aval A2. La longueur de la cloison 4 est inférieure à la profondeur de la cuve 1 mais la largeur de cette cloison 4 est identique à la largeur de la cuve 1 de façon à assurer, lorsque le couvercle 3 est en place sur la cuve 1, une division étanche des compartiments A1 et A2, du fait que la cuve 1 contient, dans sa partie inférieure, un liquide neutre 5 dans lequel plonge la partie inférieure de la cloison 4 et ce sur une hauteur suffisante.

Le liquide neutre 5 est en général de la glycérine liquide, un produit antigel du commerce, par exemple un mélange d'eau et de glycol ou du mono-éthylène-glycol. Mais on peut egalement utiliser de l'huile neutre de transformateur électrique et, de toute façon, ce liquide neutre doit avoir un point de congélation aussi bas que possible de façon à rester liquide même aux températures hivernales.

Comme le montrent les fig. 1 et 2, la cuve 1 comporte un sas d'entrée 6 et un sas de sortie 7 qui sont situés dans la zone médiane de la cuve 1 et qui permettent aux câbles électriques 8, 8a... de relier les ensembles de pompage et de mesurage aux différentes consoles de surveillance. Comme le montre le dessin, les câbles 8, 8a passent sous la cloison 4 et plongent dans le liquide neutre 5 pour ressortir ensuite en allant ainsi du sas d'entrée 6 au sas de sortie 7. Ces derniers sont d'ailleurs prolongés par des conduits divers 10, 11 évitant aux câbles 8, 8a d'être en contact avec le sol S1.

Dans la partie amont A1 de la cuve 1 se trouvent, d'une part, un détecteur 12 de mélange détonant relié par un câble 13 à la console de contrôle intéressée et, d'autre part, un dispositif de ventilation ou organe de sécurité 14 qui normalement permet l'échappement vers l'atmosphère des gaz nocifs.

Dans le compartiment aval A2 se trouvent, d'une part, un détecteur de niveau 15 permettant de vérifier la hauteur du liquide neutre 5 dans la cuve 1 et, d'autre part, une canalisation 16 permettant à l'aide d'une vanne 17 d'injecter si nécessaire un complément de liquide neutre 5.

Dans l'exemple de réalisation ci-dessus, la cuve 1 est de section rectangulaire mais elle pourrait avoir, en section, d'autres formes si cela était nécessaire.

La cuve 1, noyée dans le sol S1 qui est en général une dalle de béton armée ou non, est réalisée en un matériau anti-corrosion ou très résistant.

Il en est de même pour le couvercle 3 et pour la cloison de séparation 4 bloquant le liquide neutre 5.

Le détecteur de sécurité 12, du genre explosimètre, permet le déclenchement d'une alarme visuelle et efficace en cas de mélange explosif et est donc une deuxième sécurité puisque normalement le mélange gazeux devrait s'échapper vers l'atmosphère par une ventilation 14.

De plus, le détecteur de niveau 15 ou sonde de sécurité assure à partir d'un niveau bien déterminé l'efficacité et la bonne marche du regard de sécurité à siphon anti-gaz.

**Revendications**

1 - Regard de sécurité à siphon anti-gaz pour installations dangereuses enterrées dans le sol et reliées par des sas (6, 7) à des galeries, des gaines ou conduits divers (10, 11) conduisant d'une part, à des postes de distribution contenant de nombreux groupes moto-pompes-mesureurs et, d'autre part à au moins un central rassemblant les informations, caractérisé en ce qu'il comprend une cuve (1) de grandeur et de forme diverses fermée par un couvercle (3) muni, en son centre, d'une cloison verticale (4) dont l'extrémité inférieure est située à une certaine hauteur du fond de la cuve (1); cette dernière étant remplie d'un liquide neutre dont le niveau dépasse notoirement l'extrémité de la cloison centrale (4) sous laquelle passent les câbles électriques de liaison entre les ensembles de distributeurs-mesureurs et le poste central de façon à ce que cette cloison verticale (4) délimite deux compartiments amont et aval complètement séparés par le liquide neutre (5) puis les dispositifs complémentaires de sécurité étant placés dans chacun des compartiments (A1, A2) pour d'un côté détecter les mélanges détonants et de l'autre côté contrôler le niveau du liquide neutre.

2 - Regard de sécurité à siphon anti-gaz suivant la revendication 1, caractérisé en ce que la partie supérieure de la cuve (1) comporte un pourtour évasé (2) destiné à supporter la périphérie du couvercle (3) afin d'étanchéifier la cuve (1).

3 - Regard de sécurité à siphon anti-gaz suivant l'une des revendications 1 et 2, caractérisé en ce que la partie amont du regard de sécurité à siphon anti-gaz est munie d'un dispositif de ventilation (14) et d'un dispositif de détection de mélange détonant (12).

**Patentansprüche**

1 - Sicherheitsschacht mit einem Antigassiphon für in den Boden eingebettete gefährdete Anlagen die durch Schleusen (6, 7) an Kanäle, Hüllen oder sonstige Leitungen (10, 11) angeschlossen sind, die einerseits zu Verteilungsstellen mit einer Anzahl von mit Messgeräten versehenen Motorpumpen und andererseits zu einer die Informationen sammelnden Zentrale führen, dadurch gekennzeichnet, dass er einen von einem Deckel (3) verschlossenen Schacht (1) von beliebiger Form und Grösse umfasst, der etwa in seiner Mitte eine vertikale Trennwand (4) aufweist, deren unteres Ende sich in einer bestimmten Höhe vom Boden des Schachtes (1) befindet, wobei der Schacht mit einer neutralen Flüssigkeit gefüllt ist, deren Niveau in der Regel das Ende der mittleren Trennwand (4) übersteigt, unter welcher die elektrischen Verbindungskabel zwischen den Verteiler-Messgeräten und der Zentrale hindurchgeführt sind, so dass diese vertikale Trennwand (4) zwei Abteile, ein stromaufwärtiges und ein stromabwärtiges, bildet, die durch die neutrale Flüssigkeit (5) völlig voneinander getrennt sind, wobei in jedem der Abteile Al, A2 zusätzliche Sicherungseinrichtungen vorgesehen sind, die einerseits das Auftreten explosiver Gemische anzeigen und andererseits das Niveau der neutralen Flüssigkeit überwachen.

2 - Sicherheitsschacht mit einem Antigassiphon nach Anspruch 1, dadurch gekennzeichnet, dass das Oberteil des Schachtes (1) einen erweiterten Umfang (2) zur Aufnahme des Umfangsrandes des den Schacht (1) abdichtenden Deckels (3) aufweist.

3 - Sicherheitsschacht mit einen Antigassiphon nach einem der Ansprüche 1 und 2, dadurch gekennzeichnet, dass der stromaufwärtige Teil des Sicherheitsschachtes mit dem Antigassiphon mit einer Belüftungseinrichtung (14) und einer Anzeigeeinrichtung (12) für explosible Gemische versehen ist.

## Claims

1 - Safety man hole with an anti-gas siphon for dangerous equipments buried into the ground and connected by means of gas locks (6, 7) to passages, sheaths and similar ducts (10, 11) leading on the one hand to delivery stations containing various mesuring motor-pump groups and, on the other hand to at least one main unit gathering the information, characterized in that it comprises a vat (1) of various size and shape and enclosed by a cover (3) provided, in its center, with a vertical partition wall (4) the lower portion of which is placed at a determined height from the bottom of the vat (1); the latter being filed with a neutral liquid the level of which substantially overpasses the end of the central partition wall (4) under which pass the electric cables for connecting together the distributing-measuring units and the main station so that this vertical partition wall (4) forms two upstream and downstream compartments completely separated by the neutral liquid (5) then the safety complementary means being placed in each of the compartments (A1, A2) for on one side detecting the explosive mixture and on the other side controlling the level of the neutral liquid.

2 - Safety man hole with an anti-gas siphon according to claim 1, characterized in that the upper part of the vat (1) comprises an enlarged rim (2) provided to support the periphery of the cover (3) in order to seal the vat (1).

3 - Safety man hole with an anti-gaz siphon according to one of claims 1 and 2, characterized in that the upstream part of the safety man hole with an anti-gas siphon is provided with a venting device (14) and with an explosible mixture detecting device (12).

## Fig. 1

## Fig. 2